# EUROPEAN PATENT SPECIFICATION

(11) **EP 4 631 726 B1**
(45) Date of publication and mention of the grant of the patent: **04.11.2026**
(21) Application number: 24169237.5
(22) Date of filing: 09.04.2024
(51) Int. Cl.: B33Y 50/02, B29C 64/112, H04N 1/54

(54) **METHOD FOR DETERMINING AN INK DISTRIBUTION IN A 3D OBJECT AND A PRINTER THEREFOR**
VERFAHREN ZUR BESTIMMUNG EINER TINTENVERTEILUNG IN EINEM 3D-OBJEKT UND DRUCKER DAFÜR
PROCÉDÉ DE DÉTERMINATION D'UNE DISTRIBUTION D'ENCRE DANS UN OBJET 3D ET IMPRIMANTE ASSOCIÉE

(43) Date of publication of application: 15.10.2025
(73) Proprietor: Canon Production Printing Holding B.V., 5914 HH Venlo (NL)
(72) Inventor: MESTROM, Paulus M.A., Venlo (NL); CALLEWAERT, Tom W.J., Venlo (NL)
(74) Representative: Canon Production Printing IP Department

(56) References cited:
- CN-A- 115 816 817
- US-A1- 2019 004 463

## Description

### FIELD OF THE INVENTION

The invention relates to a method for determining an ink distribution in a 3D object to be printed in colour and having a degree of translucency by a printing system which comprises a print controller and at least one printhead, wherein the printing system is configured to print 3D objects consisting of a plurality of layers on a substrate in a print direction in a plane in at least one pass of the at least one printhead relatively over the substrate per layer, while ejecting inks from nozzles of the at least one printhead towards the substrate in a direction perpendicular to the plane according to print instructions received from the print controller.

The printing system may hereinafter also be referred to as a printer.

The printhead may hereinafter also be referred to as an inkjet printing assembly.

The term "perpendicular" may hereinafter also be referred to as the term "orthogonal".

The term "nozzle" may be also referred to as "print element".

The term "3D" is meant to equivalent to the term "three-dimensional".

The printhead is meant to be configured to move relatively over the surface. In one case this means that the printhead is moving over the surface while the surface is not moving. In another case it means that the surface is moving under the printhead while the printhead is not moving. In one more other case the surface as well as the printhead are moving. All cases are applicable to the present invention.

A relative move of the printhead in one direction over the surface while ejecting filling material is called a pass. The image formed by filling material which is ejected during one pass on the surface is called a swath.

The filling material may be, including but not limited to, ink of different colours, e.g. cyan, magenta, yellow, black and white, varnish, coating liquid or any other (transparent) liquid or substance which can adhere to each other in order to deliver a high quality 3D print object.

Nozzle distances between nozzles of the at least one printhead determine the resolution in a direction perpendicular to the print direction. In principle the minimum distance between nozzles determines the resolution. In practice the minimum distance between nozzles will be a distance between two adjacent nozzles in a row of nozzles on the printhead.

The printhead according to the present invention comprises a plurality of nozzles which may be arranged in at least one row which is directed in the direction perpendicular to the print direction. The print direction is the direction in which the printhead is moving while printing, i.e. while ejecting filling material towards the surface.

### BACKGROUND OF THE INVENTION

In order to print 3D objects with a correct colour and translucency, one would need to accurately predict how light reflects from the 3D printed objects and take said predictions into account in a 3D software workflow to determine a desired ink distribution. Such predictions can be made using a mathematical model for the reflectance of light from translucent 3D objects. Since accurate predictions require much computing power, the number of calculations using such a model should be minimized. Current solutions for this ink distribution determination are time consuming or ignore the translucency.

The desired ink distribution can be determined by defining an objective function F based on colour measurements performed by a user, e.g. a dentist. This objective function F makes use of a mathematical model for the reflectance of light from translucent 3D objects. By minimizing F using a nonlinear optimization algorithm, the desired ink distribution can be found. This approach is time consuming when the model is very accurate, e.g. Monte Carlo simulations of the light propagation.

The approach mentioned here-above can be speeded up at the cost of accuracy by simplifying the model. For example, besides Monte-Carlo-based approaches, one can also use simplifications of the Radiative Transfer Equation (RTE) (e.g., a two-flux model). However, a two-flux approximation is not accurate enough for many applications. Deep learning-based models can give more accurate results, but they require large amounts of training data that is either generated by experiments or by Monte Carlo simulations.

Another approach is to avoid and/or ignore the problem and only print opaque objects, so that light does not penetrate deep into the object. In this approach the colour management of the 3D print process is similar to the colour management of a 2D print process. The main disadvantage of this approach is that the printed 3D objects will look less realistic when they are opaque.

An object of the invention is to provide a method for improve the determination of the ink distribution in an efficient way for translucent 3D objects.

CN 115 816 817 discloses 3D ink-jet printing system and method that determines, before printing, the quantities of at least two different model materials required for a given 3D model by analysing the model data and selecting a printing mode in order to calculate material usage for outer-shell and internal-fill regions.

### SUMMARY OF THE INVENTION

According to the present invention this object is achieved by the method according to the invention, wherein the method comprises the steps of
a) determining a plurality of constraints of the coloured translucent 3D object to be printed,
b) selecting a set of points at the outer surface of the 3D object visible to an observer,
c) for each point in the set defining an objective function based on a design of the 3D object including colour information, wherein the objective function depends on a plurality of decision variables defined by the plurality of constraints determined in step a), and wherein the objective function makes use of a first model for a reflectance of light from a front face of the 3D object,
d) for each point evaluating the objective function by means of the first model and determining by means of a non-linear optimization algorithm values of the decision variables that optimize the objective function,
e) for each position in the 3D object determining an ink ratio for each ink used in the print process by the printing system from the values of the decision variables determined in step d),
f) determining a reflectance of light at each point in the set by means of a second model which takes at least a part of the geometry of the 3D object into account,
g) for each point evaluating a difference in colour and translucency between predictions of the first and second model, and
h) updating the first model with light intensities corresponding to orthogonal fluxes determined by the second model,
i) repeating steps d) - h) until a predetermined accuracy of the ink ratios is achieved or a colour and translucency parameter predicted by the first and second model match at each selected point, and
j) printing the 3D object using the ink ratios determined in a last update of the first model.

The method according to the present invention involves much less evaluations of the most accurate model, i.e. the second model, and is therefore fast. This makes it eligible for use in a printing system. In step b) of the method a set of points is selected for which the objective function is optimized towards an extremum. The objective function may for example be defined as a colour difference between the design of the 3D object and the predicted output and said objective function is to be minimized. The 3D object may be designed and software may be used to colour the 3D object. For example, for designing dental crowns, the colour is designed by software. Alternatively, part of the design may be based on colour measurements. The invention is supposed to be implemented in a 3D inkjet printer that is used to print translucent 3D objects. The inventors conceived the idea to optimize the ink distribution using a reduced model, i.e. the first model, that is derived from the full model, i.e. the second model, and to update this reduced model during this optimization process using calculations involving the full model.

According to an embodiment the method comprises the step of rotating the 3D object for each point in the set such that a direction of illumination lies parallel to a normal of the front surface at the point.

According to an embodiment the method comprises the step of for each point determining the ink ratios along a line which passes through the 3D object at the point and for which the first model was evaluated, based on the values of the decision variables determined in step d) and the constraints of step a).

According to an embodiment the at least part of the geometry of the 3D object is one out of the complete geometry of the 3D object, a part of the complete geometry of the 3D object and a slice of the 3D object through the point.

According to an embodiment the plurality of constraints comprises a division of the 3D object into a plurality of components with respect to a kind of material of the component and the method comprises the step of constraining the ink ratios along a line segment passing through each component when evaluating the first model. Only ink ratios in the 1D calculations involving the first model need to be constrained, so that the number of decision variables is reduced.

According to an embodiment the step of constraining the ink ratios comprises a sub-step of assuming that the ink ratios are uniform along a line segment passing through each component.

According to an embodiment the nonlinear optimization algorithm is a descent method framework involving Newton's method in convex regions. When using said nonlinear optimization it is assumed that the objective function is being minimized.

According to an embodiment the step d) of determining the ink ratios comprises a sub-step of interpolating the values of the decision variables determined in step d) while taking the plurality of constraints into account.

According to an embodiment the second model is a four-flux or six-flux approximation of a radiative transfer equation (RTE) and the method comprises the step of fixing fluxes orthogonal to a direction of illumination in order to achieve the first model to be a two-flux approximation which is a reduction of the four-flux or six-flux approximation of the radiative transfer equation respectively and the step h) of updating the first model comprises the sub-step of updating the fluxes orthogonal to the direction of illumination.

According to an embodiment the method comprises the step of illuminating the 3D object by means of a diffuse light source.

According to an embodiment the step b) of selecting the set of points at the outer surface of the 3D object visible to an observer comprises the sub-step of selecting the set of points based on required colour and translucency gradients, wherein a density of the points of the set is determined by the magnitudes of the gradients. If the gradients are large, the set of points may be denser. If the gradients are small, less points may be chosen. By doing so the algorithm computation duration according to the colour requirements of the 3D object are optimized and determined on an individual object level. The set of points may be selected in an illuminable front face of the 3D object. According to an embodiment the 3D object is a dental implant. A brief description of a composition of a human tooth can be found on Wikipedia, for example at https://en.wikipedia.org/wiki/Human_tooth. The dental implant may have a plurality of components comprising a component representing enamel and another component representing dentin.

The present invention also relates to a printing system comprising a print controller and at least one printhead, wherein the printing system is configured to print a plurality of layers of individual prints on a substrate in a print direction in a plane in at least one pass of the at least one printhead relatively over the substrate per layer, while ejecting ink from nozzles of the at least one printhead towards the substrate in a direction perpendicular to the plane according to print instructions received from the print controller, wherein the print controller is configured to perform the steps of a method according to the present invention.

The present invention also relates to a computer program product, including computer readable code embodied on a computer readable medium, said computer readable code comprising instructions for executing the steps of a method according to the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

Hereinafter the present invention is further elucidated with references to the appended drawings showing non-limiting embodiments and wherein:
- Fig. 1: is a printing system in which the invented method is applicable;
- Fig. 2A - 2C: is a flow diagram of an embodiment of the method according to the present invention;
- Fig. 3: schematically shows an example of a front side of a 3D object with a set of points selected according to the method of the present invention; and
- Fig. 4: schematically shows a non-transitory software medium according to the invention.

### DETAILED DESCRIPTION OF EMBODIMENTS

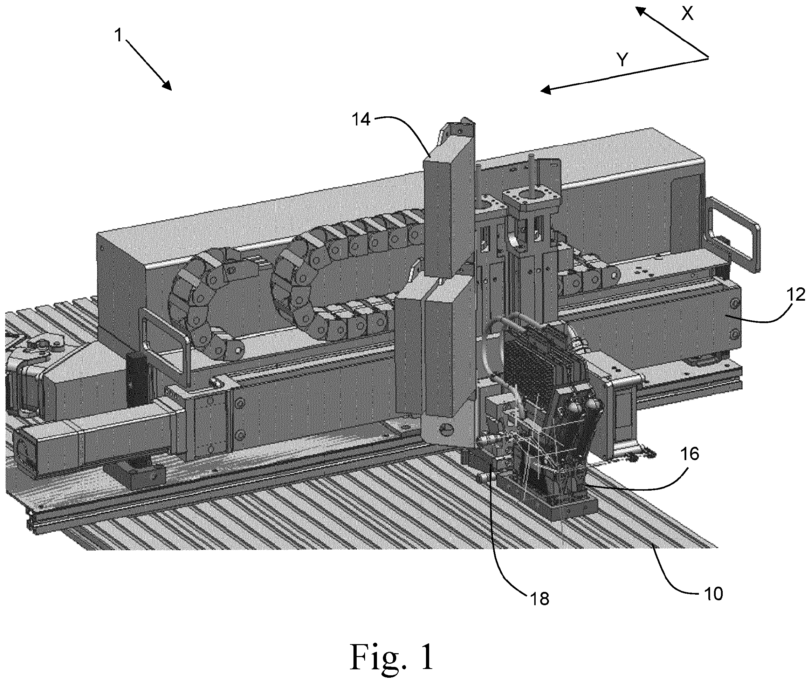

Fig. 1 shows an inkjet printer 1 in which the present invention is applicable. The inkjet printer 1 comprises holders (not shown) for inks to be ejected by means of at least one printhead 16. The at least one printhead 16 is mounted on a carriage 12 which traverses over a print surface 10 in a Y direction in the XY plane. The nozzles (not shown) are positioned in the at least one printhead 16 in a row in an X direction in the XY plane perpendicular to the Y direction. The at least one printhead 16 is comprised in a printhead holder 18.

The printer 1 in Fig. 1 shows two printheads 16, but a printer having one or more than two printheads mounted on the carriage 12 may also be envisioned and fall under the scope of the present invention.

The printer 1 comprises a print controller 14 comprising boxes with electronics for controlling the printheads 16. The print controller 14 is connected to a digital network for receiving print jobs submitted by users. The print controller comprises a Central Processing Unit (CPU), a Graphical Processor Unit (GPU), a Random Access Memory (RAM), a Read Only Memory (ROM), a network unit, an interface unit, a user interface for user input at the printer 1, a hard disk (HD) and an image processing unit such as a Raster Image Processor (RIP). The aforementioned units are interconnected through a bus system. However, the print controller 14 may also be a distributed controller. The user interface may be provided with user input and display means for receiving specifications of the object which define the object to be printed with a particular resolution. However the specifications of the particular resolution may also be part of a submitted print job to be received by the print controller via the digital network.

The CPU controls the printing system 1 in accordance with control programs stored in the ROM or on the HD and a local user interface panel. The CPU also controls the image processing unit and the GPU. The ROM stores programs and data such as boot program, set-up program, various set-up data or the like, which are to be read out and executed by the CPU. The hard disk is an example of a non-volatile storage unit for storing and saving programs and data which make the CPU execute a print process to be described later. The hard disk also comprises an area for saving the data of externally submitted print jobs. The hard disk may also comprise the input parameters for the models that are used according to the present invention. The programs and data on the HD are read out onto the RAM by the CPU as needed. The RAM has an area for temporarily storing the programs and data read out from the ROM and HD by the CPU, and a work area which is used by the CPU to execute various processes. The interface unit connects the controller to client devices and to the printing system 1. The network unit connects the print controller 14 to the network and is designed to provide communication with workstations and with other devices reachable via the network. The image processing unit may be implemented as a software component running on an operation system of the controller or as a firmware program, for example embodied in a field-programmable gate array (FPGA) or an application-specific integrated circuit (ASIC). The image processing unit has functions for reading, editing, interpreting and rasterizing the print job data. Said print job data contains image data to be printed i.e. pixel or voxel data of the object to be printed, described in a Page Description Language or the like, image processing attributes and print settings like a number of layers to be printed on top of each other, a desired resolution, a desired ink material, a desired resolution per desired ink material, a desired ink material per desired resolution, etc.

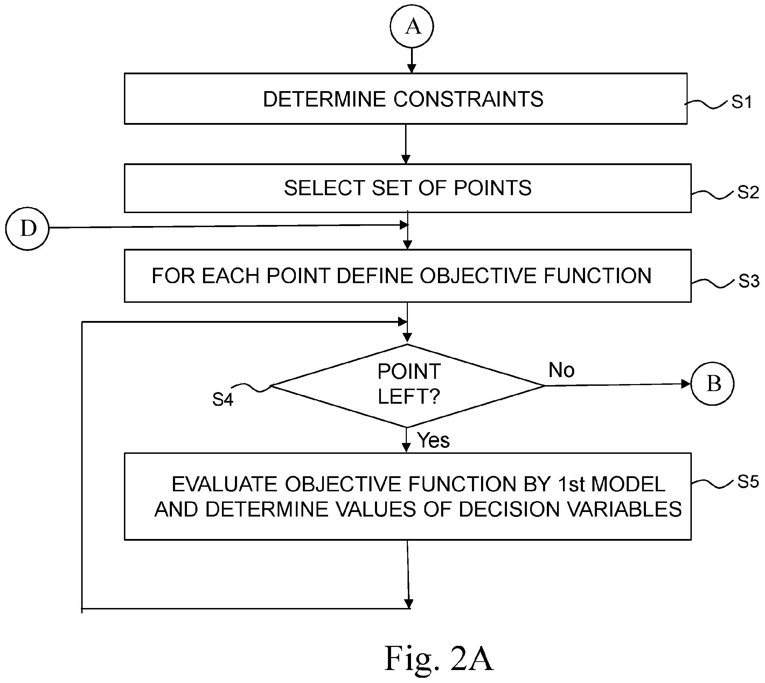

Fig. 2A - 2C show an embodiment of the method of the present invention for determining the ink distribution in the 3D object to be printed in colour and having a degree of translucency by a printing system as shown in Fig. 1. Below the method is presented to determine the ink ratios fᵢ(x,y,z) where the index i = 1,2,3... labels the inks that are used in the print process at position (x,y,z). For notational convenience, an ink ratio vector f ^{→}(x,y,z) = (f₁ (x,y,z),f₂ (x,y,z),...) is defined. The (y,z) plane is defined to be parallel to the front face of the 3D object. When calculating the reflectance of light it is assumed that the front face of the 3D object is illuminated. The method starts in a starting point A and leads to a first step S1.

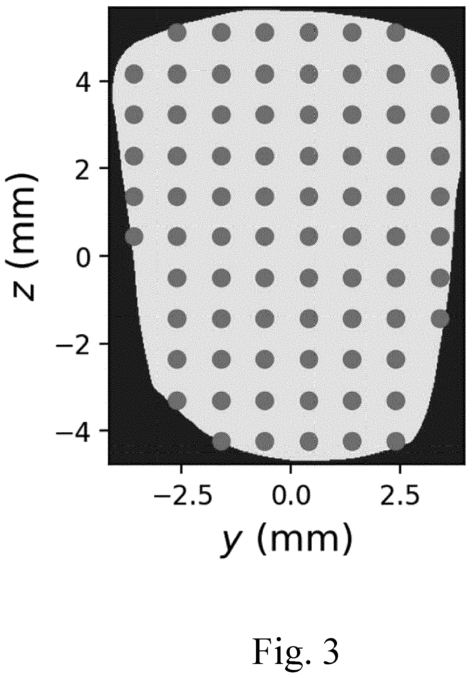

For convenience reasons the X,Y,Z directions used in the description of Fig. 1 are independently defined from the x,y,z directions used in the description Fig. 2A - 2C and Fig. 3 in order to allow a larger degree of freedom for the user in choosing the directions when implementing the method according to the present invention.

In the first step S1 a plurality of constraints is determined of the coloured translucent 3D object to be printed. Constraints may be for example volumes with a uniform ink ratio vector f ^{→}, a thickness of each component of the 3D object, etc. The first step S1 is used to reduce a number of decision variables in a third step S3.

In a second step S2 a set of points is selected on the outer surface of the 3D object. The set of points are indicated by {(x₁, y₁*,* z₁),( x₂, y₂, z₂),....}.

In the third step S3 an objective function is defined for each point in the set based on the design of the 3D object that includes colour information. For each point (xⱼ, yⱼ, zⱼ) with j = 1,2,3,... an objective function Fⱼ is defined. The objective function depends on a plurality of decision variables v ^{→}ⱼ defined by the plurality of constraints determined in the first step S1. The objective function Fⱼ makes use of a first model for a reflectance of light from a front face of the 3D object, i.e. light fluxes along the x direction according to the first model, which is the reduced model and can be calculated quickly. An example of an objective function is: $F = \sqrt{{\left({L}_{calc}^{*}-{L}_{int}^{*}\right)}^{2} + {\left({a}_{calc}^{*}-{a}_{int}^{*}\right)}^{2} + {\left({b}_{calc}^{*}-{b}_{int}^{*}\right)}^{2} + {\left({TP}_{calc}-{TP}_{int}\right)}^{2}}$ where ( ${L}_{int}^{*} , {a}_{int}^{*} , {b}_{int}^{*}$) is the intended colour at the selected point and TPᵢₙₜ is the intended translucency parameter at the selected point. Furthermore ( ${L}_{calc}^{*} , {a}_{calc}^{*} , {b}_{calc}^{*}$) is the calculated colour at the selected point and TP_{calc} is the calculated translucency parameter at the selected point.

In a fourth step S4 it is checked if each point in the set has been involved.

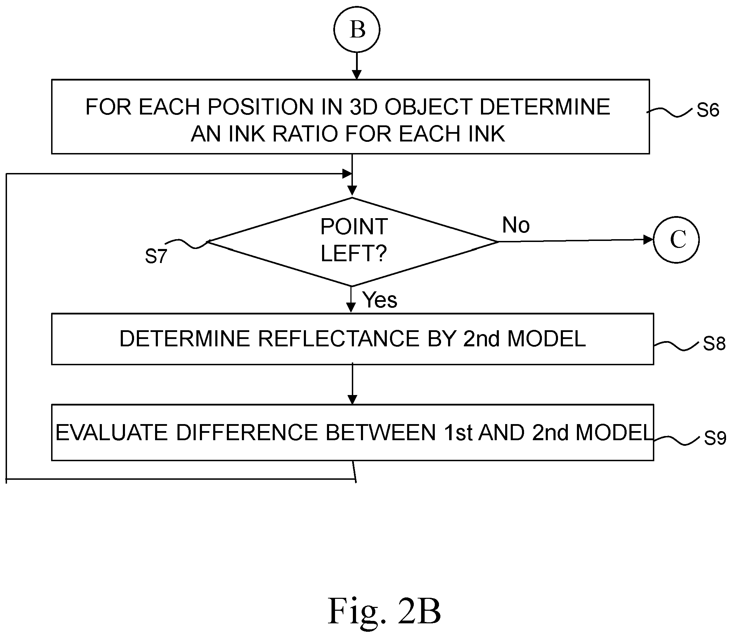

If not, the method proceeds with the fifth step S5. If so, the method proceeds to a seventh step S7 in Fig. 2B via an intermediate point B.

In a fifth step S5 the objective function Fⱼ is evaluated by means of the first model. Values of the decision variables v ^{→}ⱼ that minimize the objective function Fⱼ are determined by means of a non-linear optimization algorithm. The method returns to the fourth step S4.

In a sixth step S6 for each position in the 3D object determining the ink ratio vector f ^{→}(x,y,z) for each ink used in the print process by the printing system from the values of the decision variables v ^{→}ⱼ with j = 1,2,3,... determined in sixth step S6. The determination may be done by interpolation, while taking the constraints determined in the first step S1 into account. The positions in the 3D object for which the ink ratios are determined are selected according to a 3D grid. If the 3D grid is defined upfront, it must be dense enough, which depends on a magnitude of the gradients of the ink ratios. According to a preferred embodiment the positions in the 3D object for which the ink ratios are determined are selected according to spatial grids that are used in an eighth step S8.

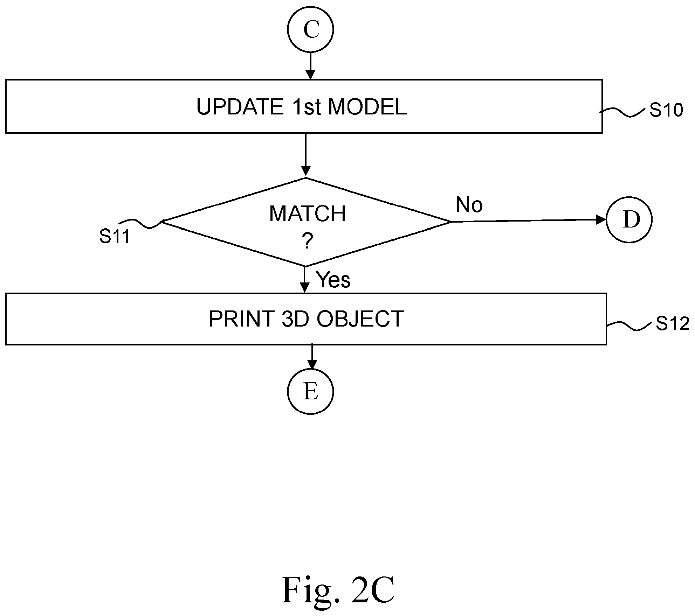

In the seventh step S7 it is checked if each point in the set has been involved. If so, the method proceeds via an intermediate point C to a tenth step S10 in Fig. 2C. If not, the method proceeds with the eighth step S8.

In the eighth step S8 a reflectance of light is determined by means of a full model, i.e. the second model which takes at least a part of the geometry of the 3D object into account. For example, the second model involves light fluxes along the x, y and z direction.

In a ninth step S9 a difference in colour and translucency is evaluated between predictions of the first and second model. When evaluating the second model, the 3D grid is chosen such that the grid spacing is smaller than in the sixth step S6, for example at least a factor of 10 smaller. In fact, it is chosen to be much smaller than 1/S(x, y, z) and 1/K(x, y, z) where S and K are the scattering and absorption coefficients for which the 3D model is evaluated and will be explained hereinbelow. Therefore, in the sixth step S6 the 3D grid may be used which is planned to use in the eighth step S8. The method returns to the seventh step S7.

In the tenth step S10 the first model is updated with light intensities corresponding to orthogonal fluxes determined by the second model.

In an eleventh step S11 it is checked if a predetermined accuracy of the ink ratios is achieved or a colour and translucency parameter predicted by the first and second model are matching at each selected point. If so, the method proceeds with a twelfth step S12. If not, the method returns via an intermediate point D to the third step S3 in Fig. 2A.

In the twelfth step S12 the 3D object is printed using the ink ratios determined in a last update of the first model.

The method ends in an end point E.

According to another embodiment the method comprises the step of rotating the 3D object for each point in the set such that a direction of illumination lies parallel to anormal of the front surface at the point. For this other embodiment additional coordinates (x', y', z') are introduced in order to define a rotated frame at each selected point (x', y', z'). When calculating the reflectance of light at a selected point, it is assumed that the point is illuminated parallel to the normal of the surface of the object at said point.

The full second model may be a six-flux approximation of the radiative transfer equation (RTE). By indicating the intensity of light travelling in the positive x-direction by iₓ (x,y,z), the intensity of light travelling in the negative x-direction by jₓ (x,y,z), the intensity of light travelling in the positive y-direction by i_{y} (x,y,z), the intensity of light travelling in the negative y-direction by j_{y} (x,y,z), the intensity of light travelling in the positive z-direction by i_{z} (x,y,z) and the intensity of light travelling in the negative z-direction by jₓ (x,y,z), the following set of differential equations may be derived from the RTE: $\frac{\partial {i}_{x}}{\partial x} = - \left(K\left(x, y, z\right)+5S\left(x, y, z\right)\right) {i}_{x} + S \left(x, y, z\right) \left({j}_{x}+{i}_{y}+{j}_{y}+{i}_{z}+{j}_{z}\right)$ $- \frac{\partial {j}_{x}}{\partial x} = - \left(K\left(x, y, z\right)+5S\left(x, y, z\right)\right) {j}_{x} + S \left(x, y, z\right) \left({i}_{x}+{i}_{y}+{j}_{y}+{i}_{z}+{j}_{z}\right)$ $\frac{\partial {i}_{y}}{\partial x} = - \left(K\left(x, y, z\right)+5S\left(x, y, z\right)\right) {i}_{y} + S \left(x, y, z\right) \left({j}_{y}+{i}_{x}+{j}_{x}+{i}_{z}+{j}_{z}\right)$ $- \frac{\partial {j}_{y}}{\partial x} = - \left(K\left(x, y, z\right)+5S\left(x, y, z\right)\right) {j}_{y} + S \left(x, y, z\right) \left({i}_{y}+{i}_{x}+{j}_{x}+{i}_{z}+{j}_{z}\right)$ $\frac{\partial {i}_{z}}{\partial x} = - \left(K\left(x, y, z\right)+5S\left(x, y, z\right)\right) {i}_{z} + S \left(x, y, z\right) \left({j}_{z}+{i}_{x}+{j}_{x}+{i}_{y}+{j}_{y}\right)$ $- \frac{\partial {j}_{z}}{\partial x} = - \left(K\left(x, y, z\right)+5S\left(x, y, z\right)\right) {j}_{z} + S \left(x, y, z\right) \left({i}_{z}+{i}_{x}+{j}_{x}+{i}_{y}+{j}_{y}\right)$

Here an absorption coefficient *K*(*x, y, z*) is defined as the amount of light that is absorbed per unit of travelled distance and the scattering coefficient *S*(*x, y, z*) is defined as the amount of light that is randomly scattered per unit of travelled distance. The coefficients *K*(*x, y, z*) and *S*(*x, y, z*) are determined by the ink ratio vector *̅f̅*̅(*x, y, z*) via $K \left(x, y, z\right) = \vec{K} ⋅ \vec{f} \left(x, y, z\right)$ and $S \left(x, y, z\right) = \vec{S} ⋅ \vec{f} \left(x, y, z\right) ,$ where *K̅ =* (*K*₁(*λ*),*K*₂(*λ*)*,K*₃(*λ*),...) and *̅S̅*̅ = (*S*₁(*λ*),*S*₂(*λ*),*S*₃(*λ*),...) collect the absorption and scattering coefficients of the inks for each wavelength A, respectively. By also specifying the reflection and transmission coefficients at the air-ink and ink-air interfaces, the total reflectance of light can be calculated.

Solving the above six-flux model is time consuming with respect to models with reduced precision. This model can be further reduced to a two-flux model by fixing the fluxes along y and z. This reduced model allows for a fast evaluation of the reflectance of light. The update of the reduced model in the eleventh step S11 would imply updating the fluxes along y and z in the two-flux model.

When an object is illuminated by a diffuse light source, a two-flux model is generally quite accurate when *K*(*λ*) ≫ *S*(*λ*) and S is small because the photons will then travel in a straight line within the material. Whenever *S*(*λ*) cannot be negelected or when *S*(*λ*) *> K*(*λ*), a two-flux model becomes inaccurate. Materials that look white (e.g., teeth) scatter much light and *S*(*λ*) is therefore not negligible. Therefore the six-flux model is preferably used in a colour/translucency management for dental elements as the second model.

In the second step S2 of the method according to the present invention a set of points {(y₁,z₁ ),(y₂,z₂ ),...} is chosen in the (y,z) plane for which an objective function is minimized. Fig. 3 schematically shows the front of a dental crown with a chosen set of points for which an objective function is minimized. Fig. 3 shows the (y,z) plane of the dental crown that is represented in a light colour. The grid of data points represented by circles in Fig. 3 show the set of points in the (y,z) plane for which the objective function is minimized. The sampling of the grid is variable with the realism requirements of the printed object.

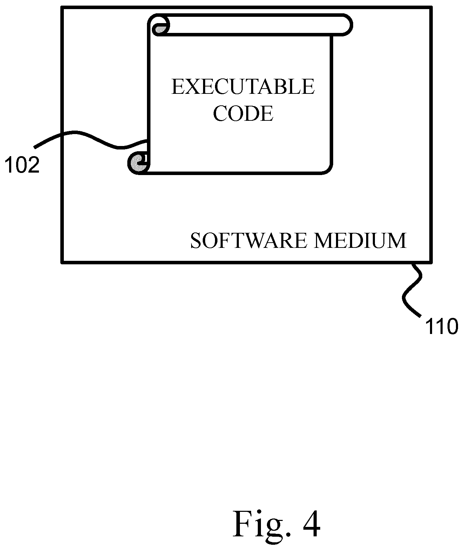

Fig. 4 schematically shows a non-transitory software medium 110 according to the invention. The software medium 110 comprises executable code 102 configured to, when executed, perform the method according to the invention, e.g. as described with respect to either the printer shown in Fig. 1 or the method shown in Fig. 2A - 2C and/or according to any of the variants and modifications of the printer and/or of the method described hereinbefore.

The non-transitory software medium 110 may, specifically, be formed as a CD or a CD-ROM, a DVD or a DVD-ROM, a Blu Ray disc or a Blu Ray-ROM disc, a magnetic hard drive, a solid state disk (SSD) hard drive, a USB memory device and so on.

The above disclosure is intended as merely exemplary, and not to limit the scope of the invention, which is to be determined by reference to the following claims.

## Claims

1. Method for determining an ink distribution in a 3D object to be printed in colour and having a degree of translucency by a printing system which comprises a print controller and at least one printhead, wherein the printing system is configured to print 3D objects consisting of a plurality of layers on a substrate in a print direction in a plane in at least one pass of the at least one printhead relatively over the substrate per layer, while ejecting inks from nozzles of the at least one printhead towards the substrate in a direction perpendicular to the plane according to print instructions received from the print controller,
wherein the method comprises the steps of
a) determining a plurality of constraints of the coloured translucent 3D object to be printed,
b) selecting a set of points at the outer surface of the 3D object visible to an observer,
c) for each point in the set defining an objective function based on a design of the 3D object that includes colour information, wherein the objective function depends on a plurality of decision variables defined by the plurality of constraints determined in step a), and wherein the objective function makes use of a first model for a reflectance of light from a front face of the 3D object,
d) for each point evaluating the objective function by means of the first model and determining by means of a non-linear optimization algorithm values of the decision variables that optimize the objective function,
e) for each position in the 3D object determining an ink ratio for each ink used in the print process by the printing system from the values of the decision variables determined in step d),
f) determining a reflectance of light at each point in the set by means of a second model which takes at least a part of the geometry of the 3D object into account,
g) for each point evaluating a difference in colour and translucency between predictions of the first and second model, and
h) updating the first model with light intensities corresponding to orthogonal fluxes determined by the second model,
i) repeating steps d) - h) until a predetermined accuracy of the ink ratios is achieved or a colour and translucency parameter predicted by the first and second model match at each selected point, and
j) printing the 3D object using the ink ratios determined in a last update of the first model.

2. Method according to claim 1, wherein the method comprises the step of for each point in the set rotating the 3D object such that a direction of illumination lies parallel to a normal of the front surface at the point.

3. Method according to claim 1 or 2, wherein the method comprises the step of for each point determining the ink ratios along a line which passes through the 3D object at the point and for which the first model was evaluated, based on the values of the decision variables determined in step d) and the constraints of step a).

4. Method according to any of the preceding claims, wherein the at least part of the geometry of the 3D object is one out of the complete geometry of the 3D object, a part of the complete geometry of the 3D object and a slice of the 3D object through the point.

5. Method according to any of the preceding claims, wherein the plurality of constraints comprises a division of the 3D object into a plurality of components with respect to a kind of material of the component and the method comprises the step of constraining the ink ratios along a line segment passing through each component.

6. Method according to claim 5, wherein the step of constraining the ink ratios comprises a sub-step of assuming that the ink ratios are uniform along a line segment passing through each component.

7. Method according to any of the preceding claims, wherein the nonlinear optimization algorithm is a descent method framework involving Newton's method in convex regions.

8. Method according to any of the preceding claims, wherein step b) of selecting the set of points at the outer surface of the 3D object visible to an observer, comprises the sub-step of selecting the set of points based on required colour and translucency gradients, wherein a density of the points of the set is determined by the magnitudes of the gradients.

9. Method according to any of the preceding claims, wherein the step e) of determining the ink ratios comprises a sub-step of interpolating the values of the decision variables determined in step d) while taking the plurality of constraints into account.

10. Method according to any of the preceding claims, wherein the second model is a four-flux or six-flux approximation of a radiative transfer equation (RTE) and the method comprises the step of fixing fluxes orthogonal to a direction of illumination in order to achieve the first model to be a two-flux approximation which is a reduction of the four-flux or six-flux approximation of the radiative transfer equation respectively and the step h) of updating the first model comprises the sub-step of updating the fluxes orthogonal to the direction of illumination.

11. Method according to any of the preceding claims, wherein the step b) of selecting the set of points at the outer surface of the 3D object comprises the sub-step of selecting the set of points based on required colour and translucency gradients.

12. Method according to any of the preceding claims, wherein the 3D object is a dental implant.

13. Method according to claim 5 or 6, wherein the 3D object is a dental implant and the plurality of components comprises a component which represents enamel of a dental implant and another component represents dentin of a dental implant.

14. A printing system comprising a print controller and at least one printhead, wherein the printing system is configured to print a plurality of layers of individual prints on a substrate in a print direction in a plane in at least one pass of the at least one printhead relatively over the substrate per layer, while ejecting ink from nozzles of the at least one printhead towards the substrate in a direction perpendicular to the plane according to print instructions received from the print controller, wherein the print controller is configured to perform the steps of a method according to any of the preceding claims.

15. A computer program product comprising instructions which when executed by a print system according to claim 14 cause said print system to carry out a method according to any of the claims 1-13.

## Patentansprüche

1. Verfahren zur Bestimmung einer Tintenverteilung in einem farbig zu druckenden 3D-Objekt mit einem gewissen Grad an Transluzenz durch ein Drucksystem, das eine Drucksteuerung und mindestens einen Druckkopf umfasst, wobei das Drucksystem so konfiguriert ist, dass es 3D-Objekte, die aus einer Vielzahl von Schichten bestehen, auf einem Substrat in einer Druckrichtung in einer Ebene in mindestens einem Durchgang des mindestens einen Druckkopfs relativ über das Substrat pro Schicht druckt, wobei Tinten aus Düsen des mindestens einen Druckkopfes gemäß von der Drucksteuerung empfangenen Druckbefehlen in einer Richtung senkrecht zu der Ebene auf das Substrat ausgestoßen werden,
wobei das Verfahren die folgenden Schritte umfasst:
a) Ermitteln einer Vielzahl von Randbedingungen des zu druckenden farbigen, durchscheinenden 3D-Objekts,
b) Auswahl einer Menge von Punkten an der für einen Betrachter sichtbaren Außenfläche des 3D-Objekts,
c) für jeden Punkt in der Menge die Definition einer Zielfunktion auf der Grundlage eines Entwurfs des 3D-Objekts, der Farbinformationen enthält, wobei die Zielfunktion von einer Vielzahl von Entscheidungsvariablen abhängt, die durch die in Schritt a) ermittelte Vielzahl von Randbedingungen definiert sind, und wobei die Zielfunktion ein erstes Modell für die Lichtreflexion von einer Vorderseite des 3D-Objekts verwendet,
d) für jeden Punkt die Zielfunktion mittels des ersten Modells zu bewerten und mittels eines nichtlinearen Optimierungsalgorithmus Werte der Entscheidungsvariablen zu bestimmen, die die Zielfunktion optimieren,
e) für jede Position im 3D-Objekt wird aus den in Schritt d) ermittelten Werten der Entscheidungsvariablen ein Tintenanteil für jede im Druckprozess vom Drucksystem verwendete Tinte bestimmt,
f) Bestimmung eines Lichtreflexionsgrades an jedem Punkt der Menge mittels eines zweiten Modells, das zumindest einen Teil der Geometrie des 3D-Objekts berücksichtigt,
g) für jeden Punkt eine Differenz in Farbe und Transluzenz zwischen den Vorhersagen des ersten und des zweiten Modells zu bewerten, und
h) Aktualisieren des ersten Modells mit Lichtintensitäten, die den vom zweiten Modell ermittelten orthogonalen Flüssen entsprechen,
i) Wiederholen der Schritte d) - h), bis eine vorgegebene Genauigkeit der Tintenverhältnisse erreicht ist oder ein vom ersten und zweiten Modell vorhergesagter Farb- und Transluzenzparameter an jedem ausgewählten Punkt übereinstimmt, und
j) Drucken des 3D-Objekts unter Verwendung der bei einer letzten Aktualisierung des ersten Modells ermittelten Tintenverhältnisse.

2. Verfahren nach Anspruch 1, wobei das Verfahren den Schritt umfasst, für jeden Punkt der Menge das 3D-Objekt so zu drehen, dass eine Beleuchtungsrichtung parallel zu einer Normalen der Vorderseite an diesem Punkt verläuft.

3. Verfahren nach Anspruch 1 oder 2, wobei das Verfahren den Schritt umfasst, für jeden Punkt die Tintenverhältnisse entlang einer Linie zu bestimmen, die an diesem Punkt durch das 3D-Objekt verläuft und für die das erste Modell ausgewertet wurde, basierend auf den Werten der in Schritt d) ermittelten Entscheidungsvariablen und den Nebenbedingungen aus Schritt a).

4. Verfahren nach einem der vorstehenden Patentansprüche, wobei der zumindest Teil der Geometrie des 3D-Objekts entweder die vollständige Geometrie des 3D-Objekts, ein Teil der vollständigen Geometrie des 3D-Objekts oder eine Schnittebene des 3D-Objekts durch den Punkt ist.

5. Verfahren nach einem der vorstehenden Patentansprüche, wobei die Vielzahl von Einschränkungen eine Aufteilung des 3D-Objekts in eine Vielzahl von Komponenten hinsichtlich einer Materialart der Komponente umfasst und das Verfahren den Schritt des Einschränkens der Tintenverhältnisse entlang eines durch jede Komponente verlaufenden Liniensegments umfasst.

6. Verfahren nach Anspruch 5, wobei der Schritt des Einschränkens der Tintenverhältnisse einen Teilschritt umfasst, bei dem angenommen wird, dass die Tintenverhältnisse entlang eines durch jede Komponente verlaufenden Liniensegments gleichmäßig sind.

7. Verfahren nach einem der vorstehenden Patentansprüche, wobei der nichtlineare Optimierungsalgorithmus ein Abstiegsverfahren ist, das in konvexen Bereichen die Newton-Methode einbezieht.

8. Verfahren nach einem der vorstehenden Patentansprüche, wobei der Schritt b) der Auswahl der Punktmenge an der für einen Betrachter sichtbaren Außenfläche des 3D-Objekts den Teilschritt umfasst, die Punktmenge auf der Grundlage erforderlicher Farb- und Transluzenz Gradienten auszuwählen, wobei die Dichte der Punkte der Menge durch die Größen der Gradienten bestimmt wird.

9. Verfahren nach einem der vorstehenden Patentansprüche, wobei der Schritt e) der Bestimmung der Tintenverhältnisse einen Teilschritt der Interpolation der in Schritt d) bestimmten Werte der Entscheidungsvariablen unter Berücksichtigung der Vielzahl von Nebenbedingungen umfasst.

10. Verfahren nach einem der vorstehenden Patentansprüche, wobei das zweite Modell eine Vier-Flux- oder Sechs-Flux-Näherung einer Strahlungstransportgleichung (RTE) ist und das Verfahren den Schritt des Festlegens von Flüssen orthogonal zu einer Beleuchtungsrichtung umfasst, um zu erreichen, dass das erste Modell eine Zwei-Fluss-Näherung ist, die eine Reduktion der Vier-Fluss- bzw. Sechs-Fluss-Näherung der Strahlungstransportgleichung darstellt, und der Schritt h) des Aktualisierens des ersten Modells den Teilschritt des Aktualisierens der Flüsse orthogonal zur Beleuchtungsrichtung umfasst.

11. Verfahren nach einem der vorstehenden Patentansprüche, wobei der Schritt b) der Auswahl der Punktmenge an der Außenfläche des 3D-Objekts den Teilschritt der Auswahl der Punktmenge auf der Grundlage erforderlicher Farb- und Transluzenzgradienten umfasst.

12. Verfahren nach einem der vorstehenden Patentansprüche, wobei das 3D-Objekt ein Zahnimplantat ist.

13. Verfahren nach Patentanspruch 5 oder 6, wobei das 3D-Objekt ein Zahnimplantat ist und die Vielzahl von Komponenten eine Komponente umfasst, die den Zahnschmelz eines Zahnimplantats darstellt, und eine weitere Komponente das Dentin eines Zahnimplantats darstellt.

14. Drucksystem, das eine Drucksteuerung und mindestens einen Druckkopf umfasst, wobei das Drucksystem so konfiguriert ist, dass es mehrere Schichten einzelner Drucke auf ein Substrat in einer Druckrichtung in einer Ebene in mindestens einem Durchlauf des mindestens einen Druckkopfs relativ über das Substrat pro Schicht druckt, wobei Tinte aus Düsen des mindestens einen Druckkopfes in Richtung des Substrats in einer Richtung senkrecht zu der Ebene gemäß von der Drucksteuerung empfangenen Druckbefehlen ausgestoßen wird, wobei die Drucksteuerung so konfiguriert ist, dass sie die Schritte eines Verfahrens gemäß einem der vorstehenden Patentansprüche ausführt.

15. Ein Computerprogrammprodukt, das Befehle umfasst, die, wenn sie von einem Drucksystem gemäß Patentanspruch 14 ausgeführt werden, bewirken, dass das Drucksystem ein Verfahren gemäß einem der Patentansprüche 1 bis 13 durchführt.

## Revendications

1. Procédé pour déterminer la répartition de l'encre dans un objet 3D à imprimer en couleur et présentant un certain degré de translucidité, à l'aide d'un système d'impression qui comprend un contrôleur d'impression et au moins une tête d'impression, dans lequel le système d'impression est configuré pour imprimer des objets 3D constitués d'une pluralité de couches sur un substrat dans une direction d'impression dans un plan, en au moins un passage de la au moins une tête d'impression par rapport au substrat par couche, tout en éjectant des encres depuis les buses de ladite au moins une tête d'impression vers le substrat dans une direction perpendiculaire au plan, conformément à des instructions d'impression reçues du contrôleur d'impression,
le procédé comprenant les étapes consistant à
a) déterminer une pluralité de contraintes de l'objet 3D translucide coloré à imprimer,
b) sélectionner un ensemble de points situés sur la surface extérieure de l'objet 3D visible par un observateur,
c) pour chaque point de l'ensemble, définir une fonction objectif basée sur une conception de l'objet 3D qui inclut des informations de couleur, la fonction objectif dépendant d'une pluralité de variables de décision définies par la pluralité de contraintes déterminées à l'étape a), et la fonction objectif utilisant un premier modèle pour la réflectance de la lumière provenant d'une face avant de l'objet 3D,
d) pour chaque point, évaluer la fonction objectif à l'aide du premier modèle et déterminer, à l'aide d'un algorithme d'optimisation non linéaire, les valeurs des variables de décision qui optimisent la fonction objectif,
e) pour chaque position dans l'objet 3D, déterminer un rapport d'encre pour chaque encre utilisée dans le processus d'impression par le système d'impression à partir des valeurs des variables de décision déterminées à l'étape d),
f) déterminer une réflectance de la lumière en chaque point de l'ensemble à l'aide d'un deuxième modèle qui prend en compte au moins une partie de la géométrie de l'objet 3D,
g) pour chaque point, évaluer une différence de couleur et de translucidité entre les prédictions des premier et deuxième modèles, et
h) mettre à jour le premier modèle avec les intensités lumineuses correspondant aux flux orthogonaux déterminés par le deuxième modèle,
i) répéter les étapes d) à h) jusqu'à ce qu'une précision prédéterminée des rapports d'encre soit atteinte ou qu'un paramètre de couleur et de translucidité prédit par les premier et deuxième modèles coïncide en chaque point sélectionné, et
j) imprimer l'objet 3D en utilisant les rapports d'encre déterminés lors de la dernière mise à jour du premier modèle.

2. Procédé selon la revendication 1, dans lequel le procédé comprend l'étape consistant, pour chaque point de l'ensemble, à faire pivoter l'objet 3D de telle sorte qu'une direction d'éclairage soit parallèle à une normale à la surface avant en ce point.

3. Procédé selon la revendication 1 ou 2, dans lequel le procédé comprend l'étape consistant, pour chaque point, à déterminer les rapports d'encre le long d'une ligne qui passe par l'objet 3D en ce point et pour laquelle le premier modèle a été évalué, sur la base des valeurs des variables de décision déterminées à l'étape d) et des contraintes de l'étape a).

4. Procédé selon l'une quelconque des revendications précédentes, dans lequel ladite au moins une partie de la géométrie de l'objet 3D est l'une parmi la géométrie complète de l'objet 3D, une partie de la géométrie complète de l'objet 3D et une coupe de l'objet 3D passant par le point.

5. Procédé selon l'une quelconque des revendications précédentes, dans lequel la pluralité de contraintes comprend une division de l'objet 3D en une pluralité de composants en fonction du type de matériau du composant, et le procédé comprend l'étape consistant à contraindre les rapports d'encre le long d'un segment de droite passant par chaque composant.

6. Procédé selon la revendication 5, dans lequel l'étape consistant à contraindre les rapports d'encre comprend une sous-étape consistant à supposer que les rapports d'encre sont uniformes le long d'un segment de droite passant par chaque composant.

7. Procédé selon l'une quelconque des revendications précédentes, dans lequel l'algorithme d'optimisation non linéaire est un cadre de méthode de descente impliquant la méthode de Newton dans des régions convexes.

8. Procédé selon l'une quelconque des revendications précédentes, dans lequel l'étape b) consistant à sélectionner l'ensemble de points situés sur la surface extérieure de l'objet 3D visible par un observateur comprend la sous-étape consistant à sélectionner l'ensemble de points en fonction des gradients requis d' de couleur et de translucidité, la densité des points de l'ensemble étant déterminée par les amplitudes des gradients.

9. Procédé selon l'une quelconque des revendications précédentes, dans lequel l'étape e) consistant à déterminer les rapports d'encre comprend une sous-étape consistant à interpoler les valeurs des variables de décision déterminées à l'étape d) tout en tenant compte de la pluralité de contraintes.

10. Procédé selon l'une quelconque des revendications précédentes, dans lequel le deuxième modèle est une approximation à quatre flux ou à six flux d'une équation de transfert radiatif (RTE) et le procédé comprend l'étape consistant à fixer les flux orthogonaux à une direction d'éclairage afin que le premier modèle soit une approximation à deux flux, qui constitue respectivement une réduction de l'approximation à quatre flux ou à six flux de l'équation de transfert radiatif, et l'étape h) de mise à jour du premier modèle comprend la sous-étape consistant à mettre à jour les flux orthogonaux à la direction d'éclairage.

11. Procédé selon l'une quelconque des revendications précédentes, dans lequel l'étape b) consistant à sélectionner l'ensemble de points sur la surface externe de l'objet 3D comprend la sous-étape consistant à sélectionner l'ensemble de points en fonction des gradients de couleur et de translucidité requis.

12. Procédé selon l'une quelconque des revendications précédentes, dans lequel l'objet 3D est un implant dentaire.

13. Procédé selon la revendication 5 ou 6, dans lequel l'objet 3D est un implant dentaire et la pluralité de composants comprend un composant qui représente l'émail d'un implant dentaire et un autre composant qui représente la dentine d'un implant dentaire.

14. Système d'impression comprenant un contrôleur d'impression et au moins une tête d'impression, dans lequel le système d'impression est configuré pour imprimer une pluralité de couches d'impressions individuelles sur un substrat dans une direction d'impression dans un plan, en effectuant au moins un passage de la au moins une tête d'impression par rapport au substrat par couche, tout en éjectant de l'encre depuis les buses de ladite au moins une tête d'impression vers le substrat dans une direction perpendiculaire au plan, conformément à des instructions d'impression reçues du contrôleur d'impression, dans lequel le contrôleur d'impression est configuré pour exécuter les étapes d'un procédé selon l'une quelconque des revendications précédentes.

15. Produit logiciel, comprenant des instructions qui, lorsqu'elles sont exécutées par un système d'impression selon la revendication 14, amènent ledit système d'impression à mettre en œuvre un procédé selon l'une quelconque des revendications 1 à 13.
